# EUROPEAN PATENT APPLICATION

(11) **EP 2 819 075 A1**
(43) Date of publication of application: **31.12.2014**
(21) Application number: 14173662.9
(22) Date of filing: 24.06.2014
(51) Int. Cl.: G06Q 10/10

(54) **Method and apparatus for automatically synchronizing electronic devices**

(30) Priority: 28.06.2013 KR 20130076075; 04.04.2014 KR 20140040268
(71) Applicant: Samsung Electronics Co., Ltd, Gyeonggi-do 443-742 (KR)
(72) Inventor: Lee, Jongmyung, 443-742 Gyeonggi-do (KR); Lee, Eunmi, 443-742 Gyeonggi-do (KR); Park, Donggyu, 443-742 Gyeonggi-do (KR); Jin, Pyeonggyu, 443-742 Gyeonggi-do (KR)
(74) Representative: Nederlandsch Octrooibureau

(57) **Abstract**

A method for automatically synchronizing two different electronic devices is provided. The method includes when a user event is detected in a first electronic device, performing the user event; and generating status information corresponding to the user event, and transmitting the status information to a second electronic device to thereby request synchronization of the second electronic device.

## Description

### BACKGROUND OF THE INVENTION

### 1. Field of the invention

The present invention relates generally to a method and an apparatus for synchronizing electronic devices, and more particularly, to a method and an apparatus for automatically synchronizing one electronic device with another electronic device using information provided by the another electronic device.

### 2. Description of the Prior Art

With the development of industrial technologies, electronic devices are being rapidly developed. Typically, mobile communication terminals have been developed into smart terminals which are able to process a large amount of data and perform a camera function, as well as voice communication and data communication. These smart terminals are being rapidly developed on the basis of smart phones, tablet computers, smart televisions, or the like.

In addition, computers have been leading the development of electronic devices. Computers have come into widespread use. Accordingly, most people have one or more computers at home as well as in their office. In addition, thanks to the development of super high speed communication networks, larger amounts of data can be easily processed by using computers.

As computers and smart terminals rapidly advance, studies and developments about methods for using smart terminals and computers together are in progress in various fields. For example, various debates can be made by using either computers or smart terminals, or both of them, in, for example, conference halls, where crowds gather, and a school.

In a case of discussions, debates, meetings, or lectures using computers and tablet computers, hosts, teachers or professors need overall control. Accordingly, a computer or a smart terminal of a host, a teacher, or a professor is usually provided with a program for controlling terminals of participants.

Tablet computers are quite different from normal computers, e.g., Personal Computers (PCs), in mobility. That is, tablet computers representing smart terminals have mobility, while PCs cannot provide mobility due to their big size and heavy weight when compared to the tablet computers. On the contrary, PCs are superior to tablet computers in that PCs, typically, have larger storage capacity and process data quicker than tablet computers.

Accordingly, when hosts, teachers, or professors use PCs together with tablet computers, mobility, a high speed process, and a big storage space can be obtained. However, in order to use the PCs and tablet computers together in the conference, the debate, or the lecture, a user should be well-acquainted with the same before the conference, the debate, or the lecture, because the PC and tablet computers cannot synchronize with each other.

That is, since a program used in one electronic device cannot be performed in the other device, a user should note when he or she switches from one electronic device to the other electronic device before using them. This requires preliminary practice and effort from the user.

Accordingly, a method for synchronizing data between different electronic devices is required.

### SUMMARY OF THE INVENTION

The present invention is designed to address at least the problems and/or disadvantages described above and to provide at least the advantages described below.

According to one aspect of the present invention, a method and an apparatus for synchronizing data between different electronic devices in real time is provided.

According to another aspect of the present invention, a method and an apparatus by which different electronic devices can interwork with each other without a user's preliminary practice or effort is provided.

In accordance with an aspect of the present invention, there is provided an apparatus for automatically synchronizing a first electronic device and a second electronic device. The apparatus includes an input unit that detects a user's input signal; a display unit that displays an operation state of the first electronic device and second electronic device; a communication unit that communicates with the first electronic device and second electronic device; a memory that stores control data and data generated from a control; and a controller that, when a user event is detected, performs the user event, generates status information corresponding to the user event, and transmits the status information to the second electronic device to thereby request synchronization of the second electronic device.

In accordance with another aspect the present invention, there is provided a method for automatically synchronizing two different electronic devices, the method includes when a user event is detected in a first electronic device, performing the user event; and generating status information corresponding to the user event, and transmitting the status information to a second electronic device to thereby request synchronization of the second electronic device.

### BRIEF DESCRIPTION OF THE DRAWINGS

The above and other aspects, features, and advantages of certain embodiments of the present invention will be more apparent from the following detailed description when read in conjunction with the accompanying drawings, in which:
FIG. 1 is a conceptual diagram of a system by which data is synchronized between different electronic devices during a lecture, according to the present invention;
FIG. 2 is a block diagram illustrating functions of a smart terminal that operates in an automatic data synchronizing system between electronic devices, according to the present invention;
FIG. 3 is a diagram illustrating functions of a computer that operates in an automatic data synchronizing system between electronic devices, according to the present invention;
FIG. 4 is a diagram illustrating an operation in which data synchronization is performed upon reception of a user event in an electronic device that performs automatic data synchronization with the other electronic device, according to the present invention;
FIG. 5 is a diagram illustrating an operation in which data synchronization is performed when synchronization is requested in an electronic device that performs automatic data synchronization with the other electronic device, according to the present invention;
FIG. 6 is a signaling diagram illustrating an operation of automatic data synchronization between different electronic devices, according to the present invention;
FIG. 7 is a diagram illustrating an example of an operation in which data processed in a computer is synchronized with a smart terminal, according to an embodiment of the present invention;
FIGS. 8A and 8B are conceptual diagrams illustrating an operation of configuring a master and a slave between synchronized electronic devices, and connection with electronic devices of students participating in a lecture, according to various embodiments of the present invention;
FIGS. 9A and 9B are conceptual diagrams illustrating a method of transmitting and receiving data between a plurality of electronic devices of hosts and a plurality of electronic devices of participants, according to various embodiments of the present invention;
FIGS. 10A and 10B are signaling diagrams illustrating signaling between electronic devices which sequentially participate in a lecture, according to various embodiments of the present invention; and
FIG. 11 is a flowchart illustrating a method for configuring a master and a slave in electronic devices, according to various embodiments of the present invention.

### DETAILED DESCRIPTION OF EMBODIMENTS OF THE PRESENT INVENTION

Hereinafter, embodiments of the present invention will be described with reference to the accompanying drawings. The accompanying drawings of the present invention are provided in order to help understanding of the present invention, and it should be noted that the present invention is not limited to a form, disposition and the like which are illustrated in the accompanying drawings of the present invention. Also, equivalents or extensions of additional embodiments illustrated in the accompanying drawings of the present invention should be understood from the following description, taken in connection with the accompanying drawings.

With a method and an apparatus according to the embodiments of the present invention, data used between different electronic devices can be synchronized in real time. Accordingly, a user can smoothly proceed with a conference or a lecture by using different electronic devices without preliminary practice or effort.

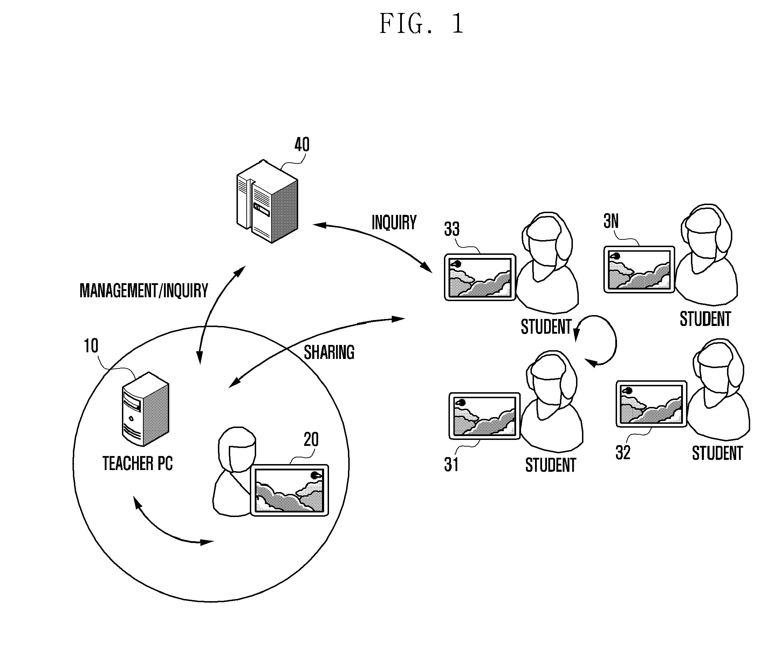

FIG. 1 is a conceptual diagram of a system by which different electronic devices are synchronized with each other in data during a lecture, according to the present invention.

Hereinafter, it is assumed that FIG. 1 refers to a lecture in school. However, it will be obvious to those skilled in the art that data synchronization may be performed between electronic devices in other forums or venues such as assembly halls, conference halls, etc., in a similar or the same way.

A teacher computer 10 and a teacher smart terminal 20, e.g., a tablet computer, may synchronize with each other to thereby automatically share data. Although the teacher computer 10 and the smart terminal 20 are illustrated in FIG. 1, any electronic devices may be adopted. For example, the electronic devices may include laptop PCs, Personal Digital Assistants (PDAs), Portable Multimedia Players (PMPs), tablet PCs, mobile phones, video phones, smart phones, electronic book readers, digital cameras, wearable devices, wireless devices, Global Positioning System (GPS) receivers, hand-held devices, MP3 players, camcorders, game consoles, electronic watches, flat panel display devices, electronic photographs, electronic boards, electronic sign boards, projectors, navigation devices, black boxes, set-top boxes, electronic dictionaries, refrigerators, air conditioners, cleaners, artificial intelligence robots, TVs, Digital Video Disk (DVD) players, audio players, ovens, microwaves, washing machines, air purifiers, medical devices, automotive devices, maritime devices, aviation devices, security devices, agricultural-stockbreeding-fisheries devices, electronic clothes, electronic keys, electronic bracelets, electronic necklaces, or the like. These electronic devices may be operated by various operating systems such as Android@, iOS®, Windows@, Linux®, Symbian®, Tizen®, Bada®, or the like. It will be obvious to those skilled in the art that electronic devices and operating systems according to various embodiments of the present invention are not limited to the above-described devices.

The teacher computer 10 may synchronize with the teacher smart terminal 20 with respect to data. That is, when a teacher executes a specific program or file in one terminal, the corresponding program or file may be executed in the other terminal too. For example, when a teacher executes a specific program or file in the teacher computer 10, the corresponding program or file may be executed in the teacher smart terminal 20 too, and vice versa. The operation of automatic data synchronization between the teacher computer 10 and the teacher smart terminal 20 will be described in detail below.

Students who participate in a lecture in a classroom have smart terminals 31, 32, 33 to 3N. The smart terminals 31, 32, 33 to 3N allotted to each student may receive data provided from the teacher computer 10 and/or teacher smart terminal 20. In addition, each of the smart terminals 31, 32, 33 to 3N may provide data that is currently executed in the smart terminals to a teacher terminal upon a request for data from the teacher terminal. That is, the teacher computer 10 and the teacher smart terminal 20 which are managed by a teacher may receive data from a specific student smart terminal or the smart terminals 31, 32, 33 to 3N of all students. Further, students may register their attendance at the lecture and perform various operations by using their smart terminals. Operation of the smart terminals 31, 32, 33 to 3N used by students will not be described in more detail.

A management server 40 may communicate with the teacher computer 10 and/or the teacher smart terminal 20 and may provide a lecture schedule or information on students. In addition, if necessary, the management server 40 may transmit data to the student smart terminals 31, 32, 33 to 3N, and at the same time, may transmit the corresponding data to the teacher computer 10 and/or the teacher smart terminal 20.

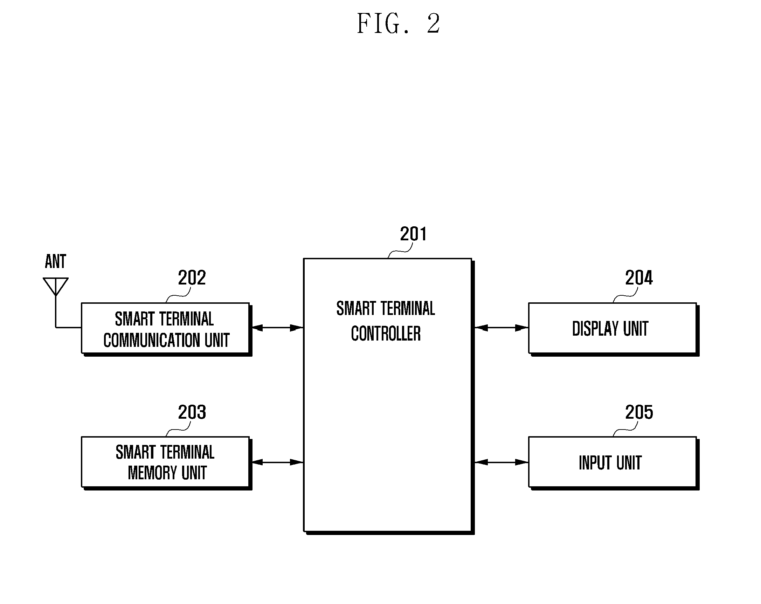

FIG. 2 is a block diagram illustrating functions of a smart terminal that operates in an automatic data synchronizing system between electronic devices according to the present invention.

A smart terminal shown in FIG. 2 may be the teacher smart terminal 20 of FIG. 1. The teacher smart terminal 20 may include a smart terminal controller 201, a smart terminal communication unit 202, a smart terminal memory unit 203, a display unit 204, and an input unit 205.

The smart terminal controller 201 controls various operations of the teacher smart terminal 20, and particularly controls automatic data synchronization with the other electronic device. The automatic data synchronization with the other electronic device by the smart terminal controller 201 will be described in detail below.

The smart terminal communication unit 202 performs communication with the other electronic device under the control of the smart terminal controller 201. For example, the smart terminal communication unit 202 encodes and modulates data to be transmitted to the other electronic device and up-converts the data with a predetermined band to be thereby transmitted through an antenna ANT. Further, the smart terminal communication unit 202 down-converts data received from the other electronic device through the antenna ANT and demodulates and decodes the data to be thereby provided to the smart terminal controller 201. Wireless communication may be carried out by various methods such as Wi-Fi, Near Field Communication (NFC), Bluetooth, and/or wireless LAN, and the present invention is not limited to these wireless communication methods.

The smart terminal memory unit 203 may be comprised of a ROM and/or a RAM and may include an area to store a large amount of data necessary for the smart terminal 20. In addition, the smart terminal memory unit 203 may include an area to store a large amount of data needed by teachers. Furthermore, the smart terminal memory unit 203 may include an area to store control data for automatic data synchronization with the other electronic device.

The display unit 204 is comprised of an LCD and/or an LED and displays an operation state of the teacher smart terminal 20, graphic interfaces provided by running applications, or the like. Particularly, the display unit 204 may display data obtained through automatic data synchronization with the other electronic device.

The input unit 205 may include keys for detecting a user input, a touch input module for detecting a user's touch input, an electronic pen input module for detecting an electronic pen input, and a hovering module for detecting hovering. The input module 205 detects a user input, i.e., a teacher input, through the input modules or keys and provides the same to the smart terminal controller 201.

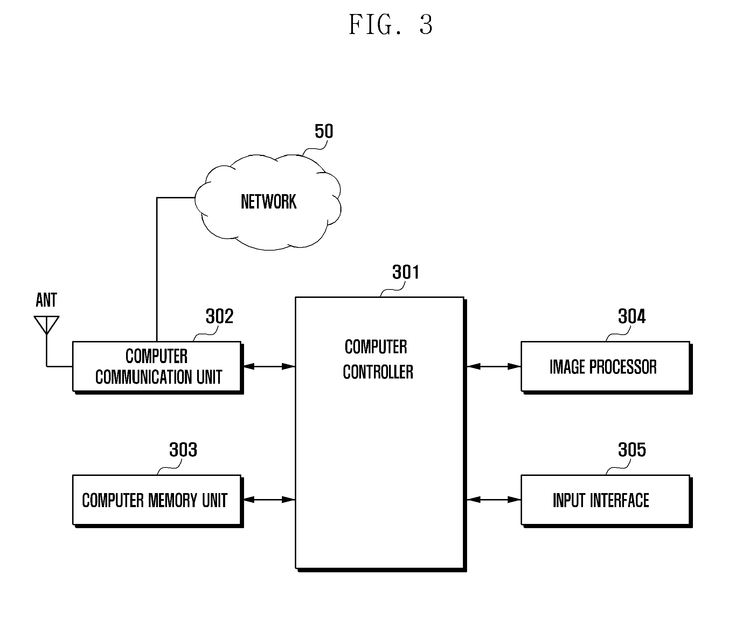

FIG. 3 is a diagram illustrating functions of a computer that operates in an automatic data synchronizing system between electronic devices, according to the present invention. A computer illustrated in FIG. 3 may be the teacher computer 10 of FIG. 1. The teacher computer 10 may include a computer controller 301, a computer communication unit 302, a computer memory unit 303, an image processor 304, and an input interface 305.

The computer controller 301 controls various operations of the teacher computer 10, and particularly controls automatic data synchronization with the other electronic device. Automatic data synchronization with the other electronic device by the computer controller 301 will be described in detail below.

The computer communication unit 302 may perform communication with the other electronic device under the control of the computer controller 301 and may include a wireless module (not shown) for wireless communication and a wired module (not shown) for connecting with a wired network 50. Accordingly, the wireless module of the computer communication unit 302 may encode and modulate data transmitted to the other electronic device and up-convert the data with a predetermined band to be thereby transmitted through an antenna ANT. Further, the wireless module may down-convert data received from the other electronic device through the antenna ANT and demodulate and decode the data to be thereby provided to the computer controller 301. Wireless communication may be carried out by the various methods described above..

In addition, the wired module of the computer communication unit 302 may transmit and receive data in a manner required in the network 50. The wired module may encode and modulate data, which is to be transmitted, and decode and demodulate received data. Further, in some cases, the wireless module and the wired module may share devices for modulating/demodulating and encoding/decoding.

The computer memory unit 303 may be comprised of a hard disc, a CD-ROM, a DVD, a ROM and/or a RAM, and may include an area to store a large amount of data necessary for the teacher computer 10. In addition, the computer memory unit 303 may include an area to store a large amount of data necessary for teachers. Furthermore, the computer memory unit 303 may include an area to store control data for automatic data synchronization with the other electronic device.

The image processor 304 processes and provides data to a display device such as a monitor in order to display a computer state, operation states of programs, and/or performed data. Particularly, the image processor 304 processes data synchronized through automatic data synchronization with the other electronic device and provides the data to a display device such as a monitor.

The input interface 305 may be connected with various input devices (not shown) such as a keyboard, a mouse, an electronic pen, a joystick and/or a touch screen. The input interface 305 receives various user input signals, which are received from the various input devices, and converts the input signals to a form that can be processed by the computer controller 301, which can send the processed input signals to other components of the teacher computer 10.

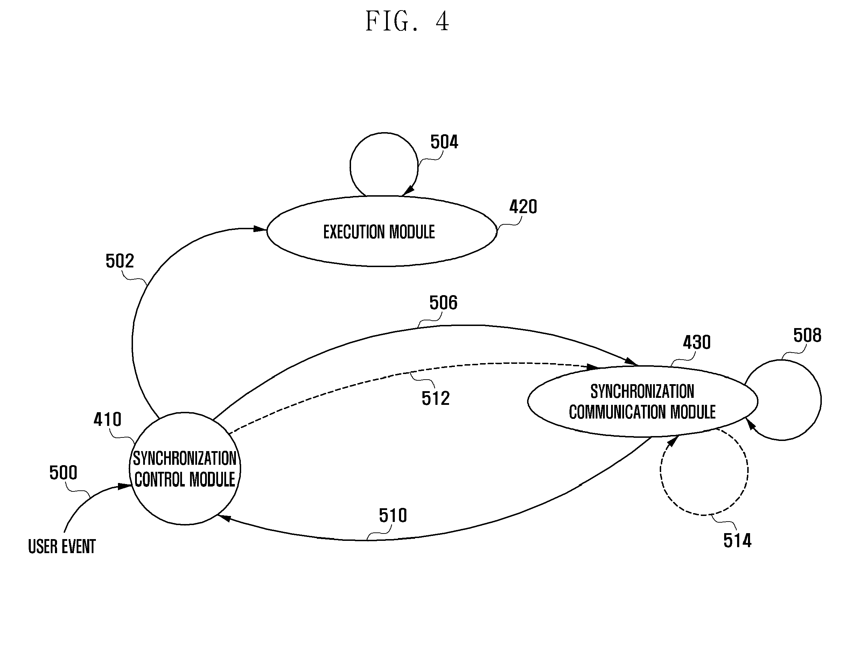

FIG. 4 is a diagram illustrating an operation in which data synchronization is performed upon reception of a user event in an electronic device that performs automatic data synchronization with the other electronic device, according to the present invention.

FIG. 4 shows a synchronization control module 410, an execution module 420, and a synchronization communication module 430. The modules shown in FIG. 4 may operate in the smart terminal controller 201 or the computer controller 301. For example, the modules may be stored as control programs in the smart terminal memory unit 203 and/or the computer memory unit 303, and when a corresponding control program is executed through the operation of the smart terminal 20 and/or the computer 10, the modules 410, 420 and 430 may operate in the smart terminal controller 201 or the computer controller 301.

In addition, although the modules 410, 420 and 430 are illustrated separately in FIG. 4, a single module may execute all the functions of these three modules. Further, it should be noted that additional modules, as well as the modules of FIG. 4, may perform operations described below.

The synchronization control module 410 controls overall operations for synchronization between electronic devices, and the execution module 420 controls execution of specific programs or data. Further, the synchronization communication module 430 controls communication with other electronic devices.

In addition, arrows of solid lines in FIG. 4 denote signal flows, event provision, and/or information provision, and arrows of dotted lines denote data and/or transmission of data.

When a user event is input at step 500, the synchronizing control module 410 checks the user event and provides the user event to the execution module 420 to thereby request execution of data or programs desired by a user at step 502. Here, the user event may be input by a user through the input unit 205 or the input interface 305 of a corresponding terminal. For example, the user event may be movement of a cursor, execution of specific programs, page movement of word program documents, or the like.

When execution of specific data or a program is requested by the synchronization control module 410 at step 502, the execution module 420 executes the corresponding data or program at step 504. For example, a word program may be requested to be executed. Further, it may be requested that specific data is transmitted to the student smart terminals 31, 32, 33 to 3N, and/or specific data is taken from the smart terminal of a specific student. Furthermore, it may be requested to move from the current page to another page and/or to write additional data onto specific data or renew or delete data.

The execution module 420 performs operations desired by a user according to the above requests.

Meanwhile, after the synchronization control module 410 requests the execution module 420 to execute the user event at step 502, the synchronization control module 410 provides user request information to the synchronization communication module 430 and requests the synchronization communication module 430 to provide the same to a predetermined electronic device to be synchronized at step 506.

At step 508, the synchronization communication module 430 provides current status information executed by a user's request to the other electronic device through a communication unit of the device such as the smart terminal communication unit 202 or the computer communication unit 302 and receives information on whether renewal is needed. This will be described in detail below.

If a teacher in a lecture requests additional execution of specific data by using the teacher computer 10, the teacher computer 10 executes the requested data. After that, or at the same time, the teacher computer 10 generates status information based on the current executed data through the synchronization communication module 430 to be thereby transmitted to the counterpart electronic device. i.e., the smart terminal 20.

The status information transmitted from the teacher computer 10 may be described as in Table 1 below.

**Table 1**

| |
|---|
| Current Device state value |
| Current Screen : cureent.jpg |
| Current : 24 |
| Current Device value : 1 |
| Current Class value : 2 |
| Monitoring/Main : true |
| Port/channel: 921 |
| Class number : 9 |
| student: 35 |

As shown in Table 1, the current status information may include status information of the electronic device that transmits the current status information, and the status information may include current displayed data and current page information.

According to this, a terminal, for example the smart terminal 20, receives the status information and compares the same with its own status information stored in the smart terminal 20. The status information stored in the smart terminal 20 may be described as in Table 2 below.

**Table 2**

| |
|---|
| Current Device state value |
| Current Screen: current.jpg |
| Current Page: 16 |
| Current Device : 2 |
| Current Class value: 3 |
| Monitoring/Main: false |
| Port/channel: 921 |
| Class number: 9 |
| Student: 35 |

Table 2 shows status information that is possessed by the smart terminal 20. The smart terminal 20 compares its own status information with status information received from the other electronic device, i.e., the teacher computer 10 to thereby identify which information is the latest. According to this, the smart terminal 20 makes a request to the counterpart electronic device, i.e., the teacher computer 10 for corresponding data, and/or changes its state according to the above information. That is, when data possessed by the smart terminal 20 has been already executed, for example, but only the page number is different, the smart terminal 20 may adjust its state to be the same as the status information received from the teacher computer 10. On the contrary, when a different program is executed, the smart terminal 20 checks whether it has the corresponding data, and if it does not have the corresponding data, the smart terminal 20 requests the teacher computer 10 to transmit the corresponding data to thereby synchronize with the teacher computer 10.

Until now, it was described that the teacher computer 10 provides the information of Table 1 to the smart terminal 20, and the smart terminal 20 compares the same with its own information of FIG. 2 **[SHOULD THIS READ "OF TABLE 2?1.** However, the reverse case can be also understood in the same way. For example, when the smart terminal 20 provides the information of Table 1 to the teacher computer 10, and the teacher computer 10 possesses the information of Table 2, the teacher computer 10 may compare the received information of Table 1 with its own information of Table 2, and perform synchronization.

Like Table 1 and Table 2 described above, status information transmitted and received between the teacher computer 10 and the smart terminal 20 may be shown in Table 3 below.

**Table 3**

| Current Contents List | Contents list opened or listed in device |
|---|---|
| Students List | Students list of participants in lecture |
| Group Information | Group information of students generated by teacher |
| Timer operates or not | Teacher operates timer function or not? |
| | - Synchronization flag preventing two devices from concurrently performing timer |
| Student Status information | Information list of students whose terminals are under locking function |
| | - online/offline, locked state, or the like |
| Group Activity starts or not | Teacher instructs group activity of students or not? |
| | - Synchronization flag, when group activity starts in one device, preventing the other device from concurrently performing the same and making the other device terminate the same |
| Group Editing is in progress or not | Synchronization flag informing of whether teacher is editing group |

As shown in Table 3, the status information transmitted and received between the teacher computer 10 and the smart terminal 20 may include contents list information, students list information, students group information, timer operating information, students list information of a locked state, group activity information, and flags about group editing.

As described above, the synchronization communication module 430 transmits its own information to the other electronic device and receives a response from the other electronic device at step 508. If the other electronic device that receives the status information has the same status information, the synchronization communication module 430 may receive a synchronization completion message from the other electronic device. Otherwise, if the other electronic device receives different information that is not possessed by the other electronic device, the synchronization communication module 430 may receive a data request message from the other electronic device.

If the data request message is received, the synchronization communication module 430 makes a request to the synchronization control module 410 for the corresponding data at step 510. The synchronization control module 410 transmits the corresponding data to the synchronization communication module 430 at step 512. Next, the synchronization communication module 430 communicates with the other electronic device and transmits the corresponding data to the other electronic device to thereby receive a synchronization completion message.

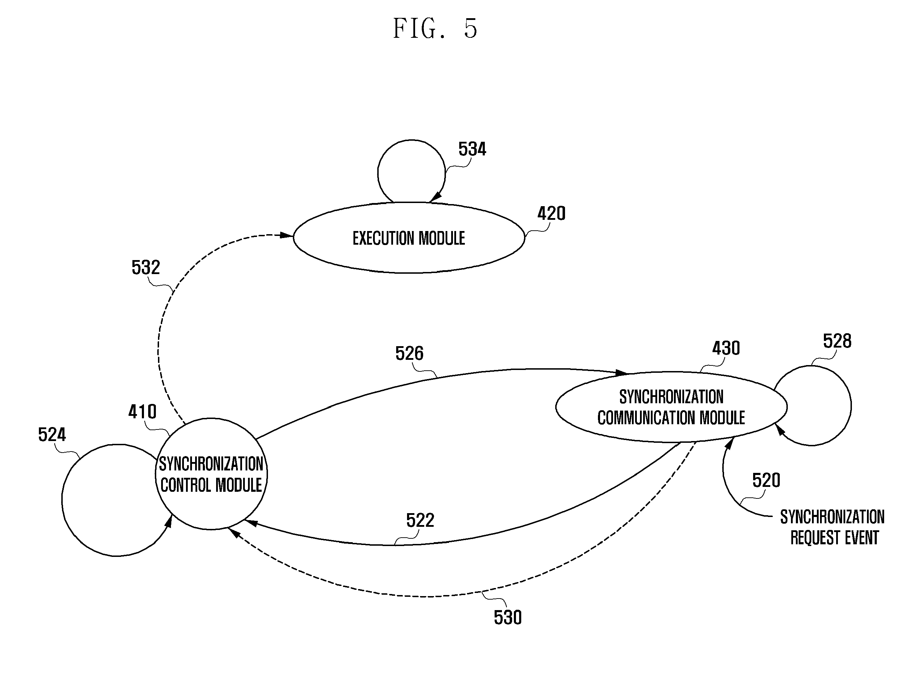

Now, the operation of requesting synchronization by the other electronic device will be described with reference to FIG. 5.

FIG. 5 is a diagram illustrating an operation in which data synchronization is performed when synchronization is requested in an electronic device that performs automatic data synchronization with the other electronic device, according to the present invention.

Like FIG. 4, FIG. 5 shows a synchronization control module 410, an execution module 420, and a synchronization communication module 430. The modules shown in FIG. 5 may operate in the smart terminal controller 201 or the computer controller 301. That is, the modules may be stored as control programs in the smart terminal memory unit 203 and/or the computer memory unit 303, and when a corresponding control program is executed through the operation of the smart terminal 20 and/or the computer 10, the modules 410, 420 and 430 may operate in the smart terminal controller 201 or the computer controller 301.

In addition, although the modules 410, 420 and 430 are illustrated separately in FIG. 5, a single module may execute all the functions of these three modules. Further, it should be noted that additional modules as well as the modules of FIG. 5 may perform operations described below.

The synchronization control module 410 controls overall operations for synchronization between electronic devices, and the execution module 420 controls execution of specific programs or data. Further, the synchronization communication module 430 controls communication with other electronic devices.

In addition, arrows of solid lines in FIG. 5 denote signal flows, event provision, and/or information provision, and arrows of dotted lines denote data and/or transmission of data, as the same as in FIG. 4.

At step 520, the synchronization communication module 430 receives a synchronization request event from the other electronic device. That is, the synchronization communication module 430 receives status information as shown in Table 1 set forth above. When the status information is received, the synchronization communication module 430 provides the status information to the synchronization control module 410 at step 522.

The synchronization control module 410 compares the received status information of Table 1 with its own status information, for example, of Table 2 at step 524, and then the synchronization control module 410 determines which status information is the latest. If the synchronization control module 410 does not possess the latest status information, the synchronization control module 410 should renew its own status information to the latest. Hereinafter, it is assumed that the latest status information is received from the synchronization communication module 430.

When the latest status information is received form the other terminal as described above, the synchronization control module 410 may perform either of the following operations. First, when data possessed by the synchronization control module 410 is newly executed, or current running data is changed, the synchronization control module 410 provides an execution message to the execution module 420 for changing the current data to the corresponding state. Then the execution module 420 changes the current running data or newly executed data. For example, when the movement on a specific page is made in word program documents, the execution module 420 moves to the corresponding page.

For another example, when execution of other data possessed by the synchronization control module 410 is requested during the execution of specific data, the synchronization control module 410 requests the execution module 420 to execute the corresponding data. Then the execution module 420 executes the corresponding data. Accordingly, synchronization between two different electronic devices can be made.

Accordingly, when data possessed by the synchronization control module 410 is executed or renewed, information provided by the synchronization control module 410 to the synchronization communication module 430 at step 526 may be a synchronization completion message. That is, the synchronization control module 410 changes the current status information on the basis of the status information received from the synchronization communication module 430 and then allows the synchronization completion message to be transmitted to the other electronic device through the synchronization communication module 430.

On the contrary, in some cases, data that is not possessed by the synchronization control module 410 is executed. In this case, information provided by the synchronization control module 410 to the synchronization communication module 430 at step 526 may be a data transmission request message. That is, the synchronization control module 410 requests the synchronization communication module 430 to receive the corresponding data from the other electronic device.

Then, the synchronization communication module 430 makes a request to the other electronic device for the corresponding data and receives the corresponding data at step 528. When the corresponding data is received from the other electronic device, the synchronization communication module 430 provides the received data to the synchronization control module 410 at step 530.

The synchronization control module 410 provides the corresponding data to the execution module 420 and thereby requests the execution module 420 to execute the corresponding data at step 532. Subsequently, the execution module 420 executes the corresponding data at step 534. Synchronization between electronic devices can be made for data not possessed by an electronic device as well as data possessed by the electronic device.

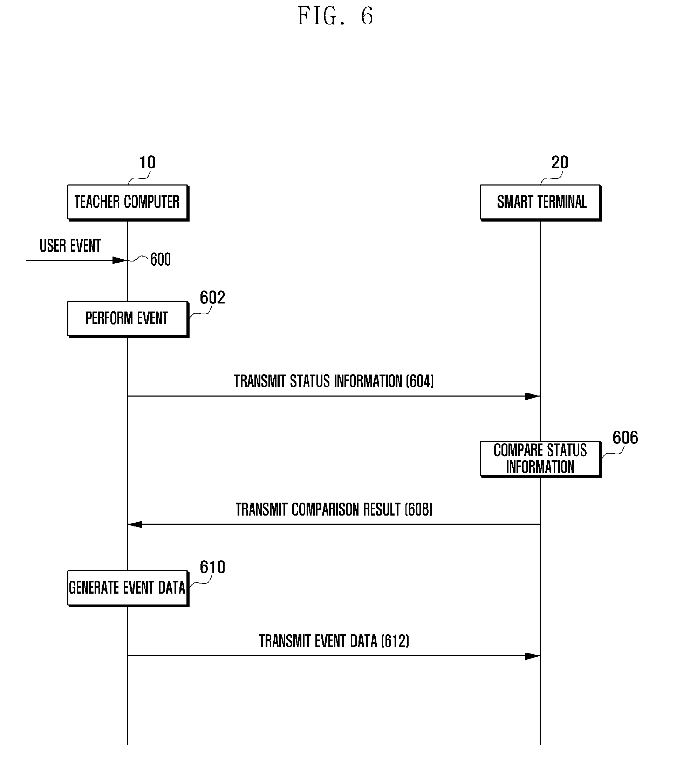

FIG. 6 is a signaling diagram illustrating an operation of automatic data synchronization between different electronic devices, according to the present invention.

FIG. 6 refers to a case in which the teacher computer 10 performs a specific event, and FIG. 6 shows signal flows when the teacher computer 10 and the teacher smart terminal 20 are synchronized with each other according to the specific event.

When a user event is received at step 600, the teacher computer 10 performs an corresponding event at step 602. For example, when movement to a certain page of a textbook for a lecture is required, the movement to the page may be conducted.

After the teacher computer 10 performs the event upon reception of the user event as described above, the teacher computer 10 transmits status information at operation 604. As described with respect to FIG. 4, the status information may be generated by the synchronization control module 410and may be transmitted to the other electronic device, i.e., the smart terminal 20 through the synchronization communication module 430. Accordingly, the synchronization communication module 430 transmits the status information to the teacher smart terminal 20 as shown at step 604. At this time, the transmitted status information may be the same as Table 1 as set forth above.

When the smart terminal 20 receives the transmitted status information at step 604, the synchronization communication module 430 receives the status information and provides the same to the synchronization control module 410.

The synchronization control module 410 of the smart terminal 20 compares its own status information with the received status information to thereby determine which one is the latest in step 606. Mostly, in a case in which a synchronization request event is received from the other electronic device, the status information received from the other electronic device may be the latest. This may be the operation of comparing Table 1 with Table 2, as described above.

If the received status information is the latest, the smart terminal 20 performs synchronization according to the received status information. If the data to be synchronized with the latest status information belongs to the smart terminal 20, the smart terminal 20 generates a synchronization completion message and provides the same to the teacher computer 10. When the smart terminal 20 performs synchronization by using its own data, a comparison result that is transmitted at operation 608 may be a synchronization completion message.

On the contrary, if the data to be synchronized with the latest status information does not belong to the smart terminal 20, the smart terminal 20 requests the corresponding data. In this case, a comparison result transmitted by the smart terminal 20 at step 608 may be a message for requesting the corresponding data.

If the teacher computer 10 receives a synchronization completion message at step 608, steps 610 to 612 will be omitted. Contrarily, if the smart terminal 20 requests data corresponding to the performed event, the teacher computer 10 generates the corresponding data at step 610. Here, the generated data may be data corresponding to the event performed by the teacher computer 10 at step 602. Subsequently, the teacher computer 10 transmits the generated data to the smart terminal 20 at step 612. According to this, the smart terminal 20 executes the received data to perform synchronization.

Although not shown in FIG. 6, when the synchronization is completed according to the received data, the smart terminal 20 generates a synchronization completion message and provides the same to the teacher computer 10.

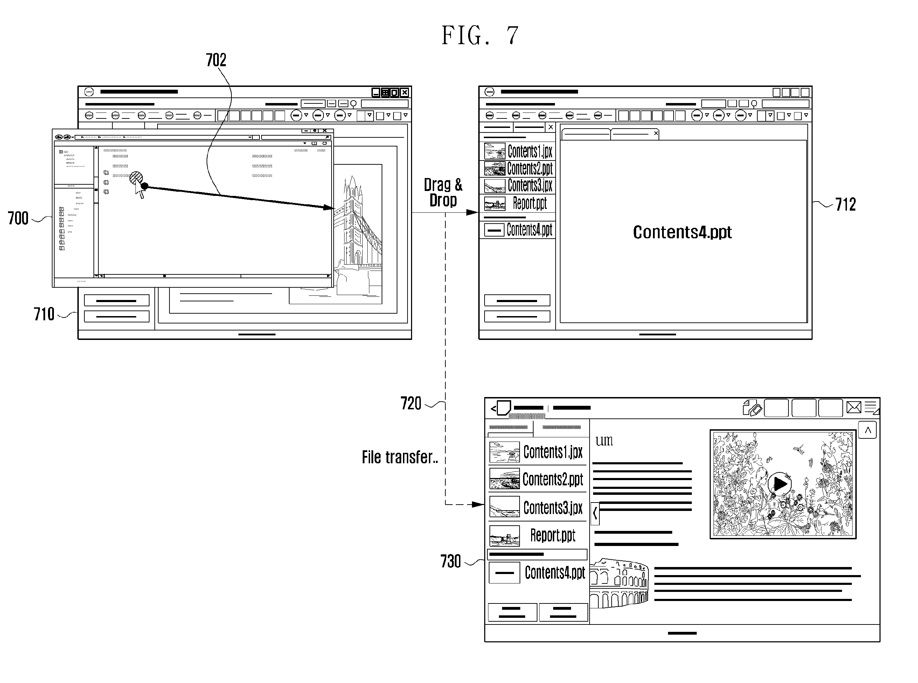

For example, a screen image configuration of synchronization, when a teacher computer executes data that is not possessed by the smart terminal 20 or data that is possessed by the smart terminal 20, will be described with reference to FIG. 7.

FIG. 7 is a diagram illustrating an example of an operation in which data processed in a computer is synchronized with a smart terminal, according to an embodiment of the present invention.

When a specific program such as Windows Explorer 700 is executed in the teacher computer 10, Window Explorer 700 is displayed on the uppermost current screen image. The present invention refers to an operation in which data stored in a certain folder indicated by reference numeral 702 in Window Explorer 700 is required to be executed, for example, by dragging and dropping the file onto a specific application. When a specific file is required to be executed as above, the teacher computer 10 executes the file and performs synchronization with the other electronic device, e.g., the smart terminal 20, that is configured to be synchronized.

Reference numeral 712 shows the execution of the data or file in the teacher computer 10. In addition, the data executed in the teacher computer 10 may be executed in the other electronic device, e.g., the smart terminal 20, in the same way through synchronization between them as set forth before. Reference numeral 720 in FIG. 7 denotes the synchronization operation. Specifically, data processed in one electronic device may be synchronized in real time in the other electronic device that is configured to be synchronized with the electronic device.

Accordingly, users such as teachers, or hosts in conferences or debates may utilize desired data by using two different electronic devices.

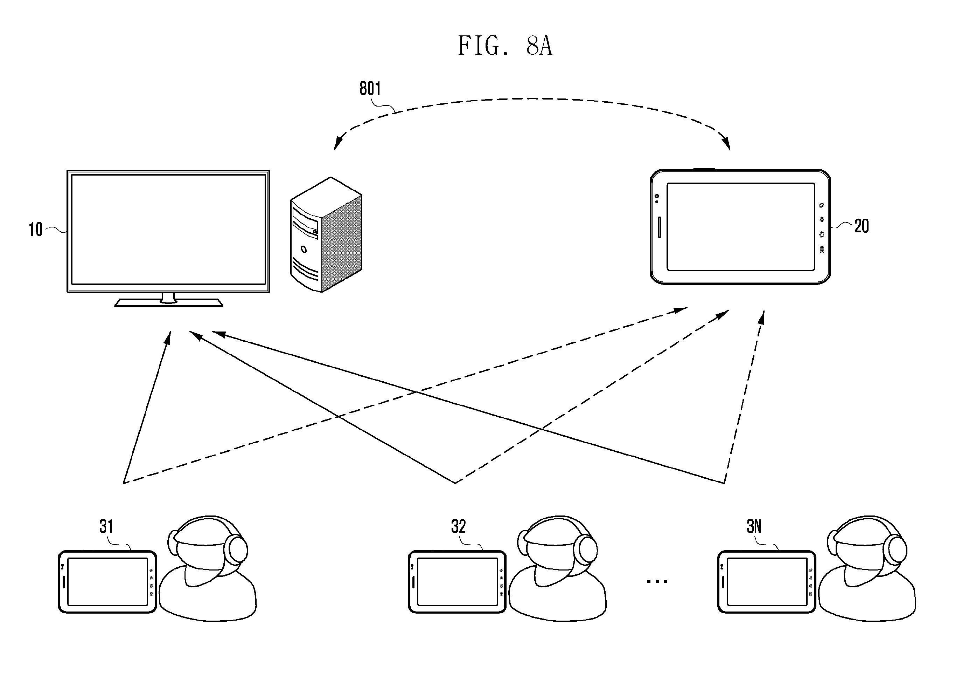

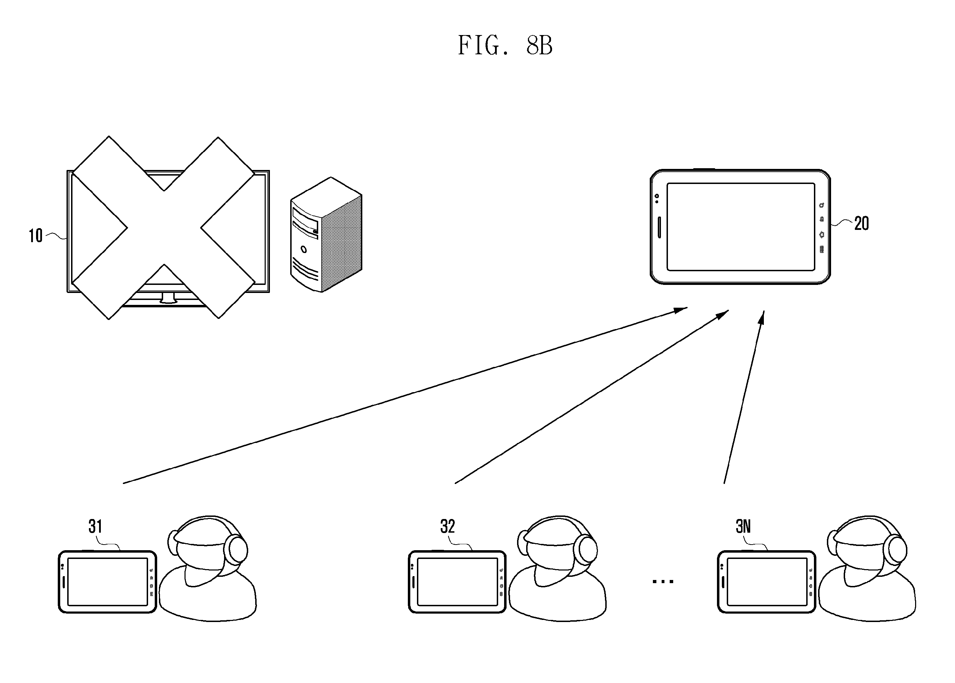

FIGS. 8A and 8B are conceptual diagrams illustrating an operation of configuring a master and a slave between synchronized electronic devices, and connection with electronic devices of students participating in a lecture, according to various embodiments of the present invention .

Referring to FIG. 8A, the teacher computer 10 has synchronized with the teacher smart terminal 20 as indicated by a dotted both-direction arrow 801. The synchronization has been set forth before, so further description will be omitted here. In addition, students have the smart terminals 31, 32, 33 to 3N. The smart terminals 31, 32, 33 to 3N are connected with the teacher computer 10 or the teacher smart terminal 20 to thereby receive data.

One of the teacher computer 10 and the teacher smart terminal 20 may be a master electronic device, and the other may be a slave electronic device. Either the teacher computer 10 or the teacher smart terminal 20, which can synchronize with each other, may be a master electronic device. Accordingly, it is necessary to configure a master electronic device and a slave electronic device, respectively.

In accordance with the embodiments of the present invention, the electronic device that is used to begin a lecture first may be configured to be a master electronic device. For example, when a teacher begins a lecture in the teacher computer 10, the teacher computer 10 may configure itself as the master electronic device during a procedure for beginning a lecture and inform the teacher smart terminal 20 that the teacher computer 10 has been configured to be a master electronic device. On the contrary, when a teacher begins a lecture by using the teacher smart terminal 20, the teacher smart terminal 20 may configure itself as the master electronic device during a procedure for beginning a lecture and inform the teacher computer 10 that the teacher smart terminal 20 has been configured to be a master electronic device.

When a signal informing of the configuration of a master is received from any one of two electronic devices, which synchronize with each other, the other electronic device may be automatically configured to be a slave. Accordingly, when using three or more electronic devices, an electronic device that is used to begin a lecture first may be a master and the remaining synchronized electronic devices may be slaves. Although the above description refers to a lecture, the present invention may be used in other forums or venues such as in conferences or the National Assembly.

The smart terminals 31, 32, 33 to 3N allotted to each student may try to connect with a master electronic device to thereby follow a lecture through information provided by the master electronic device. At this time, the master electronic device may transfer information on a slave electronic device(s) to the student smart terminals 31, 32, 33 to 3N. Accordingly, the student smart terminals 31, 32, 33 to 3N may be connected with the slave electronic device(s).

Further, the master electronic device may check whether the student smart terminals 31, 32, 33 to 3N are in a normal state by using messages such as beacon messages.

If a teacher begins a lecture by using the teacher computer 10, the teacher computer 10 may be a master electronic device and the teacher smart terminal 20 may be a slave electronic device. With the configuration of a master and a slave as described above, the electronic devices may synchronize with each other by using messages of Table 1 and Table 2, or Table 3 as set forth above.

For example, while a teacher is delivering a lecture by using the teacher computer 10 configured as a master electronic device, if the teacher switches from the teacher computer 10 to the teacher smart terminal 20 that is a slave during the lecture, the teacher smart terminal 20 may maintain the consistency in status information with the master electronic device, i.e., the teacher computer 10. The teacher may continue to give a lecture by using the teacher smart terminal 20 configured as a slave. In this case, the teacher smart terminal 20, which is configured as a slave, may provide status information to the teacher computer 10 configured as a master to thereby make synchronization.

FIG. 8B illustrates an example in which any electronic device used in a lecture malfunctions.

FIG. 8B shows a malfunction of the teacher computer 10 after beginning a lecture. When one of teacher's electronic devices malfunctions after beginning a lecture, the other electronic device may be used to allow the lecture to continue. Accordingly, when the teacher computer 10, which is configured as a master, malfunctions, the teacher smart terminal 20 operating as a slave may take over the authority of a master or may be automatically switched to a master.

In a case of taking over the authority of a master or automatically switching to a master due to a malfunction of a master electronic device, a slave electronic device may transmit necessary data to the student smart terminals 31, 32, 33 to 3N. Accordingly, the student smart terminals 31, 32, 33 to 3N may be connected with the new master electronic device to thereby continue to follow the lecture without any additional operation.

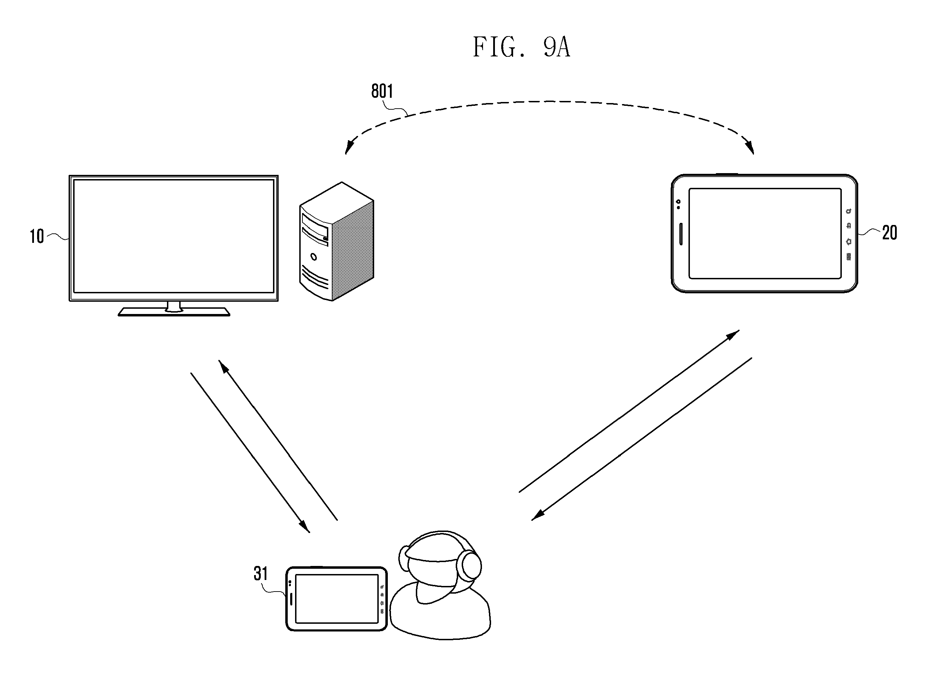

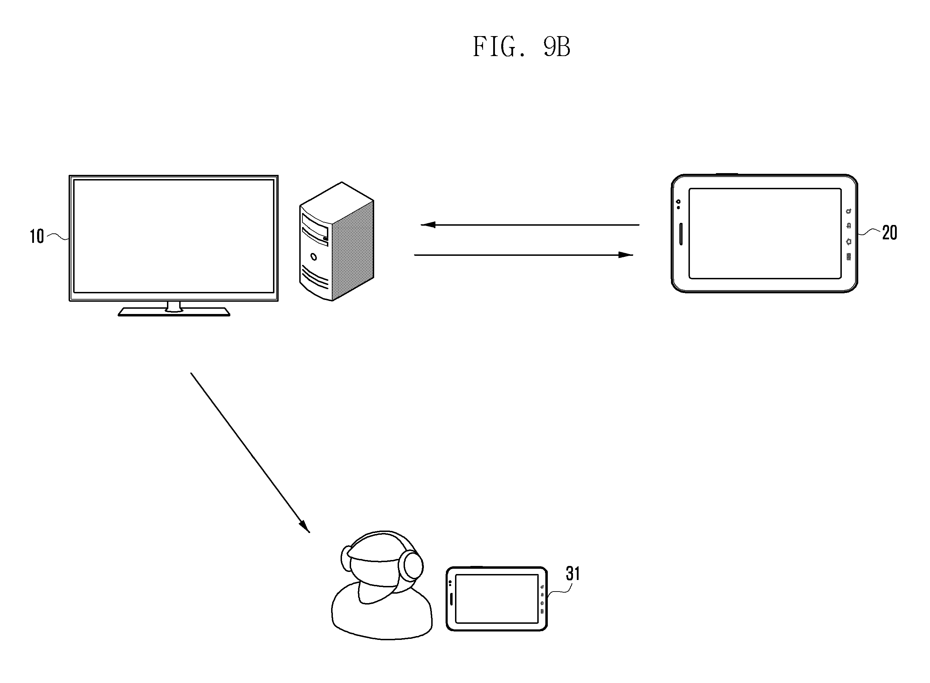

FIGS. 9A and 9B are conceptual diagrams illustrating a method of transmitting and receiving data between a plurality of electronic devices of hosts and a plurality of electronic devices of participants, according to various embodiments of the present invention.

FIGS. 9A and 9B refer to a lecture delivered by a teacher. However, it will be obvious to those skilled in the art that the embodiment of FIGS. 9A and 9B may be applied to forums or venues such as conferences.

Referring to FIG. 9A, the teacher computer 10 and the teacher smart terminal 20 have synchronized with each other as described in FIGS. 8A and 8B. Here, the synchronization is made for a lecture. For example, when a teacher delivers a lecture by using the teacher computer 10, the teacher computer 10 and the teacher smart terminal 20 displays the same information related to the lecture. On the contrary, when the teacher delivers a lecture by using the teacher smart terminal 20, information in the teacher smart terminal 20 may be provided to the teacher computer 10 in the same form through synchronization. At this time, any one of the teacher computer 10 and the teacher smart terminal 20 may be a master electronic device.

In a case of a lecture using two or more electronic devices such as the teacher computer 10 and the teacher smart terminal 20, a method for collecting or providing data from or to students is required.

In the embodiment of FIG. 9A, the student smart terminal 31 may be configured to transmit and receive data or status information to and from any of the teacher computer 10 and the teacher smart terminal 20. In a case in which the student smart terminal 31 can transmit and receive data or status information to and from one of the teacher computer 10 and the teacher smart terminal 20 as described above, when an electronic device that is currently not used by a teacher for a lecture receives data or status information, the teacher computer 10 and the teacher smart terminal 20 shares the corresponding information through synchronization.

The data transmitted and received between the student smart terminal 31 and the teacher computer 10 or the teacher smart terminal 20 may be files, group activity results, answers to a quiz, screen image information of a student terminal, or the like. In addition, the status information transmitted and received between the student smart terminal 31 and the teacher computer 10 or the teacher smart terminal 20 may be an on-line/off-line state of the student terminal.

In the embodiment illustrated in FIG. 9B, the student smart terminal 31 is configured to transmit and receive data or status information to and from only an electronic device that is pre-set as a master or a predetermined electronic device. In a case of the student smart terminal 31 that transmits and receives data or status information to and from only one electronic device of the teacher computer 10 and the teacher smart terminal 20, the following operations may be conducted.

According to an embodiment of the present invention, when the teacher computer 10 is configured as a master, it may be configured that only the master teacher computer 10 can transmit and receive data or status information to and from the student smart terminal 31. Accordingly, when the teacher delivers a lecture by using the teacher smart terminal 20, the teacher computer 10 may obtain data processed in the teacher smart terminal 20 through the synchronization as set forth before. Accordingly, the teacher computer 10 may provide required data and status information to the student smart terminal 31.

According to an embodiment of the present invention, when the teacher computer 10 is configured as a master, it may be configured that only the master teacher computer 10 can transmit and receive data or status information to and from the student smart terminal 31. Accordingly, when the teacher delivers a lecture by using the teacher computer 10, the teacher computer 10 provides current data or information to the teacher smart terminal 20 for synchronization, and at the same time, the teacher computer 10 provides data or status information to the student smart terminal 31.

According to an embodiment of the present invention, when the teacher smart terminal 20 is configured as a master, it may be configured such that only the master teacher smart terminal 20 can transmit and receive data or status information to and from the student smart terminal 31. Accordingly, when the teacher delivers a lecture by using the teacher smart terminal 20, data processed in the teacher smart terminal 20 may be provided to the teacher computer 10 through the synchronization as described above. At the same time, the teacher smart terminal 20 provides data and status information to the student smart terminal 31.

According to an embodiment of the present invention, when the teacher smart terminal 20 is configured as a master, it may be configured such that only the master teacher smart terminal 20 can transmit and receive data or status information to and from the student smart terminal 31. Accordingly, when the teacher delivers a lecture by using the teacher computer 10, the teacher computer 10 receives current data or information through the teacher smart terminal 20. In addition, the teacher smart terminal 20 provides data and status information to the student smart terminal 31.

The above-described data transmitted and received between the student smart terminal 31 and the teacher computer 10 or the teacher smart terminal 20 may be files, group activity results, answers of a quiz, screen image information of a student terminal, or the like. In addition, the status information transmitted and received between the student smart terminal 31 and the teacher computer 10 or the teacher smart terminal 20 may be an on-line/off-line state of the student terminal.

Further, the teacher computer 10, teacher smart terminal 20, and the smart terminals 31, 32, 33 to 3N may use the same operating system, or different operating systems, respectively, and a specific group or specific several electronic devices may use the same operating system.

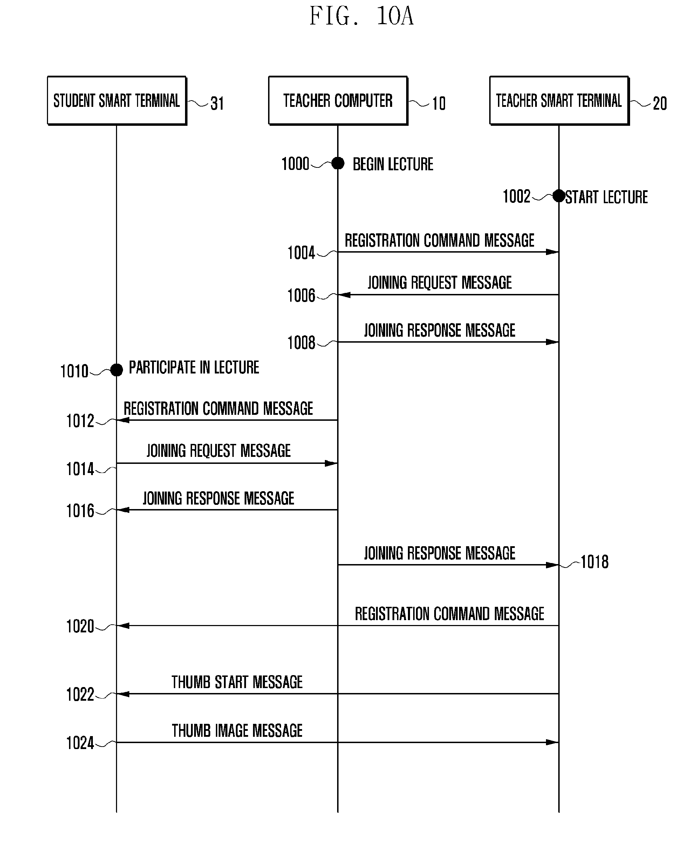

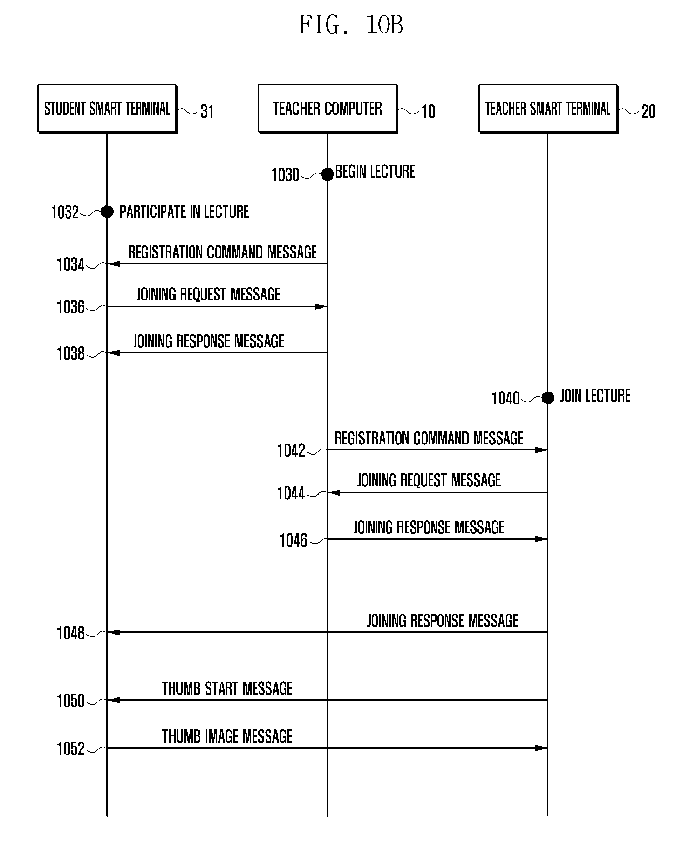

FIGS. 10A and 10B are signaling diagrams illustrating signaling between electronic devices which sequentially participate in a lecture, according to various embodiments of the present invention .

Operations of FIGS. 10A and 10B will be described with the teacher computer 10, the teacher smart terminal 20, and the student smart terminal 31 described in FIG. 1. In addition, although one student smart terminal 31 is shown in FIGS. 10A and 10B, all student smart terminals 31, 32, 33 to 3N may operate in the same manner as shown in FIGS. 10A and 10B.

First, referring to FIG. 10A, the teacher computer 10 is configured as a master electronic device as it is being used to begin a lecture at step 1000. Next, the teacher smart terminal 20 begins the lecture at step 1002.

The teacher computer 10 transmits a registration command message to the teacher smart terminal 20 at step 1004. Then, the teacher smart terminal 20 generates a joining request message and transmits the same to the master teacher computer 10, which has begun the lecture, at step 1006. Accordingly, tThe teacher computer 10 generates a joining response message and transmits the same to the teacher smart terminal 20 at step 1008.

Subsequently, when the student smart terminal 31 participates in the lecture at step 1010, the master teacher computer 10 generates a registration command message and transmits the same to the student smart terminal 31 at step 1012. Accordingly, the student smart terminal 31 receives the registration command message and transmits a joining request message at step 1014. Then, the teacher computer 10 generates a joining response message and transmits the same to the student smart terminal 31 at step 1016. This may be an operation of notifying that the student smart terminal has participated in the lecture through one of teacher electronic devices.

Since the teacher electronic devices should maintain consistency in information, the teacher computer 10 needs to inform the teacher smart terminal 20 of information on students participating in the lecture. Accordingly, the teacher computer 10 generates a student status notification message and transmits the same to the teacher smart terminal 20 at step 1018. Then, the teacher smart terminal 20 should inform each student smart terminal of existence of the other electronic device other than the teacher computer 10, which can lead the lecture. Accordingly, the teacher smart terminal 20 transmits a registration command message at step 1020.

The teacher smart terminal 20 then generates a thumb start message that requests information displayed on a monitor of the student and transmits the same to the student smart terminal 31 during the lecture at step 1022. This may be performed for the teacher to check a monitor state of a specific student during the lecture. Accordingly, the student smart terminal 31 captures the screen image on the monitor of the student smart terminal 31 and transmits the same as a thumb image message to the teacher smart terminal 20 at step 1024.

According to the above, all the electronic devices used by the teacher as well as the student smart terminal may be managed, while joining the lecture.

Referring to FIG. 10B, first, the teacher computer 10 is used to begin a lecture at operation 1030. Next, the student smart terminal 31 participates in the lecture, and after that, the teacher smart terminal 20 joins the lecture.

The student smart terminal 31 participates in the lecture at operation 1032, and the teacher computer 10 transmits a registration command message to the student smart terminal 31 at operation 1034. Then, the student smart terminal 31 that has already participated in the lecture generates a joining request message and transmits the same to the teacher computer 10 at operation 1036. Accordingly, the teacher computer 10 recognizes that the corresponding student has participated in the lecture and generates a joining response message to be thereby transmitted to the student smart terminal 31 at operation 1038.

Subsequently, at operation 1042, the teacher computer 10 generates a registration command message and transmits the same to the teacher smart terminal 20 that has joined the lecture at operation 1040. Accordingly, the teacher smart terminal 20 generates a joining request message and transmits the same to the teacher computer 10 at operation 1044. Then, the master teacher computer 10 generates a joining response message and transmits the same to the teacher smart terminal 20 at operation 1046. The joining response message may include information on the student smart terminal that has logged in and status information.

As described above, the teacher electronic devices should maintain consistency in information. Accordingly, the teacher smart terminal 20 should inform each student smart terminal of an existence of the other electronic device other than the teacher computer 10, which can lead the lecture. Accordingly, the teacher smart terminal 20 transmits a registration command message to the student smart terminal 31 at operation 1048.

In addition, the teacher smart terminal 20 generates a thumb start message that requests information displayed on a monitor of the student and transmits the same to the student smart terminal 31 during the lecture at operation 1050. This may be performed for the teacher to check a monitor state of a specific student during the lecture. Accordingly, the student smart terminal 31 captures the screen image on the monitor of the student smart terminal 31 and transmits the same as a thumb image message to the teacher smart terminal 20 at operation 1052.

According to the above operations, all the electronic devices used by the teacher as well as the student smart terminal may be managed, while joining the lecture.

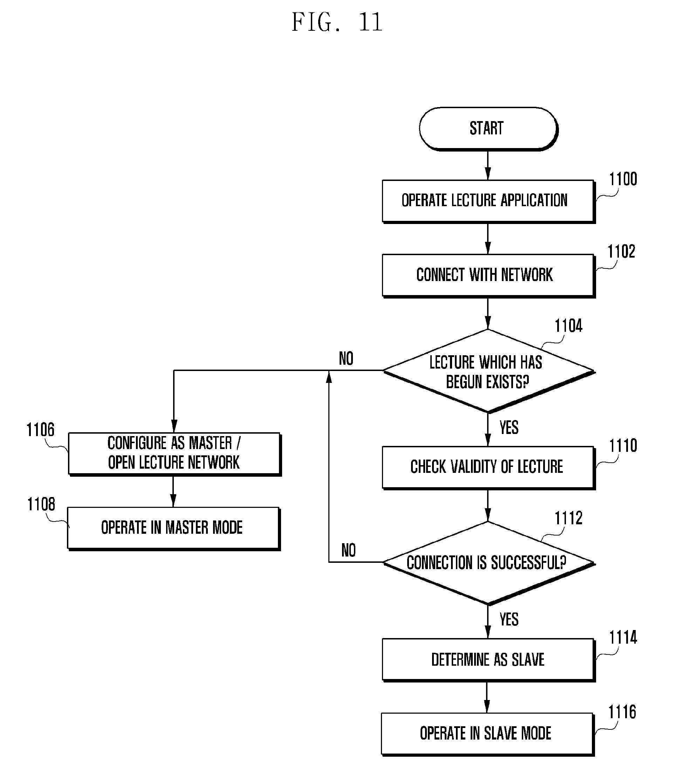

FIG. 11 is a flowchart illustrating a method for configuring a master and a slave in electronic devices, according to various embodiments of the present invention.

Hereinafter, FIG. 11 refers to the teacher computer as shown in FIG. 3. However, it is obvious to those skilled in the art that operations of FIG. 11 may be also applied to the teacher smart terminal.

The teacher computer 10 executes a lecture application at operation 1100. Here, the lecture application refers to an application program by which a plurality of electronic devices may participate in one lecture according to the present invention. In addition, the lecture application may process the operation of synchronization between the master electronic device and the slave electronic device as set forth before.

The teacher computer 10 proceeds to operation 1102 to connect with a network after performing the lecture application at operation 1100. The connection of teacher computer 10 with a network aims to determine whether any computer on the network has begun a lecture. Accordingly, the teacher computer 10 may further perform an operation of checking whether information on beginning a lecture is being broadcasted from the other electronic device. The teacher computer 10 connects with a network at operation 1102 and proceeds to operation 1104 to check whether a lecture has been begun. If there is a lecture which has begun on the network as a result of the checking at operation 1104, the sequence proceeds to operation 1110. Otherwise, if there is not a lecture which has begun on the network, the sequence proceeds to operation 1106.

First, a description will be made to a case in which there is not a lecture which has begun in the checking at operation 1104, and the sequence proceeds to operation 1106. The teacher computer 10 proceeds to operation 1106 and configures itself as a master because there is no the other electronic device configured as a master on the network. In addition, a new lecture may be begun based on a user input signal, e.g., a teacher input signal. After that, the teacher computer 10 proceeds to operation 1108 to thereby operate in a master mode. The operations of the master electronic device as described before may be performed in the master mode.

Next, if there is a lecture which has begun on the network as a result of the checking at operation 1104, the teacher computer 10 may proceed to operation 1110. When there is a lecture which has begun on the network, the teacher computer 10 collects information on the lecture which has begun from the other electronic device at operation 1110. It is assumed that the lecture which has begun is what is required to be opened. In this case, the teacher computer 10 proceeds to operation 1110 to check the validity of the lecture.

In checking the validity of the lecture at operation 1110, it is determined whether the lecture which has begun has expired, that is, the lecture which has begun has ended, or a master leading the lecture actually exists. This may be performed by identifying a finish time of the lecture and trying connecting with a master.

After step 1110, the teacher computer 10 determines whether the teacher computer 10 has been successfully connected with a specific electronic device configured as a master at step 1112. If there are a corresponding lecture and a master electronic device, the teacher computer 10 may succeed in connecting with the master electronic device. Accordingly, if the connection is successful according to the determination at step 1112, the teacher computer 10 proceeds to step 1114. On the contrary, if the connection is unsuccessful according to the determination of step 1112, the teacher computer 10 proceeds to step 1106.

In a case in which a lecture which has begun actually does not exist, or a lecture required by a teacher does not exist, the connection may be unsuccessful at step 1112, so the sequence proceeds to step 1106 where the teacher computer 10 may configure itself as a master to begin a new lecture. On the contrary, when a lecture which has begun actually exists, and a specific electronic device has been configured as a master, the connection is successful at step 1112, so the teacher computer 10 proceeds to step 1114 to thereby configure itself as a slave. Next, the teacher computer 10 proceeds to step 1116 to thereby operate in a slave mode. The stepss of the slave electronic device as described before may be performed in the slave mode.

The electronic device configured as a maser or a slave as described above may operate as a master or a slave for a predetermined amount of lecture time set by a teacher or for an amount of time automatically set by a lecture application. For example, the electronic device may operate as a master or a slave during a lecture, normally, for 45 minutes, 50 minutes, one hour, or two hours. In addition, the time may be set by a day, and a specific electronic device may be fixed as a master. A master and a slave may be configured in various ways. The example of FIG. 11 refers to two electronic devices which may operate as a master and a slave, respectively. In this case, an electronic device checks an existence of a master, and if a master exists, the electronic device is configured as a slave. Otherwise, if a master does not exist, the electronic device is configured as a master.

While the present invention has been particularly shown and described with reference to certain embodiments thereof, it will be understood by those of ordinary skill in the art that various changes in form and details may be made therein without departing from the spirit and scope of the present invention as defined by the following claims and their equivalents.

## Claims

1. A method for automatically synchronizing two different electronic devices, the method comprising:
when a user event is detected in a first electronic device, performing the user event; and
generating status information corresponding to the user event at the same time as the performing the user event, and transmitting the status information to a second electronic device to thereby request synchronization of the second electronic device.

2. The method of claim 1, wherein the status information includes at least one of current displayed data, a page of current displayed data, or final changing time information.

3. The method of claim 1, further comprising, when lecture joining request information is received from the second electronic device, registering the second electronic device as a slave electronic device, and transmitting information on electronic devices participating in a lecture to the second electronic device.

4. The method of claim 1, further comprising:
when the first electronic device receives status information from the second electronic device, comparing the received status information with status information possessed by the first electronic device; and
if the status information received from the second electronic device is the latest status information, synchronizing the first electronic device with the status of the second electronic device.

5. The method of claim 4, further comprising;
when data among the latest status information received from the second electronic device, which is not possessed by the first electronic device, requires execution, making a request to the second electronic device for the corresponding data; and
receiving the corresponding data from the second electronic device, and executing the data to thereby perform synchronization.

6. The method of claim 1, further comprising:
at the beginning of an step or when it is requested to open a lecture, checking whether there is an electronic device that has been used to begin a lecture by the first electronic device or the second electronic device; and
if there is not a lecture which has begun as a result of the checking, configuring either the first electronic device or the second electronic device as a master, and beginning a lecture to thereby operate in a master mode by the first electronic device or the second electronic device.

7. The method of claim 6, further comprising, if there is an opened lecture as a result of the checking, configuring either the first electronic device or the second electronic device as a slave, and operating in a slave mode by the first electronic device or the second electronic device.

8. The method of claim 8, further comprising, when the electronic device configured as a master malfunctions or
when a user requests a switch to a master mode, switching the slave mode of the electronic device configured as a slave to a master mode.

9. An apparatus for automatically synchronizing a first electronic device and a second electronic device, comprising:
an input unit configured to detect a user's input signal;
a display unit configured to display an step state of one of the first electronic device and the second electronic device;
a communication unit configured to communicate with the first electronic device and the second electronic device;
a memory configured to store control data and data generated by a control; and
a controller configured, when a user event is detected, to perform the user event, generates status information corresponding to the user event at the same time as the performance of the user event, and transmit the status information to the second electronic device to thereby request synchronization of the second electronic device.

10. The apparatus of claim 9, wherein, when data is requested from the second electronic device, the controller transmits data stored in the memory to the second electronic device through the communication unit.

11. The apparatus of claim 9, wherein the status information includes at least one of current displayed data, a page of current displayed data, or final changing time information.

12. The apparatus of claim 9, wherein the controller, when status information is received from the second electronic device, compares the received status information with status information of the controller, and if the status information received from the first electronic device is the latest status information, controls to synchronize with the status of the first electronic device.

13. The apparatus of claim 9, wherein the controller, at the beginning of an step or when it is requested to begin a lecture, determines whether there is an electronic device that has been used to begin a lecture, and if there is not a lecture which has begun, configures either the first electronic device or the second electronic device as a master, begins a lecture, and broadcasts that the lecture has been begun in a master mode through the communication unit.

14. The apparatus of claim 13, wherein the controller, if there is a lecture which has begun as a result of the checking, configures either the first electronic device or the second electronic device as a slave, and operates in a slave mode.

15. The apparatus of claim 14, wherein the controller, when the electronic device configured as a master malfunctions or
when a user requests a switch to a master mode, controls to switch the slave mode of the electronic device configured as a slave to a master mode.
